# DEMANDE DE BREVET EUROPEEN

(11) **EP 1 075 982 A1**
(43) Date de publication de la demande: **14.02.2001**
(21) Numéro de dépôt: 00402280.2
(22) Date de dépôt: 11.08.2000
(51) Int. Cl.: B60N 2/20

(54) **Siège à dossier rabattable et à butées escamotables, pour véhicules**

(30) Priorité: 12.08.1999 FR 9910431
(71) Demandeur: Scora (Société à Responsabilité Limitée), 94470 Boissy-Saint-Leger (FR)
(72) Inventeur: Ctorza, Serge, 94470 Boissy-Saint-Leger (FR)
(74) Mandataire: Lhuillier, René

(57) **Abrégé**

Les flancs rigides du dossier (3) se terminent par une partie profilée (22) en avant de l'axe (4) de pivotement. Ces parties profilées prennent appui sur des butées escamotables (15) solidaires des flancs (11) de l'assise (2), mais pouvant être escamotées par un mécanisme de manoeuvre comportant des tringles et bielles actionnées par un levier de commande.

Application au sièges de camping-car.

## Description

L'invention se rapporte à un siège à dossier rabattable, pour un véhicule et plus particulièrement un véhicule du type camping-car.

On sait que les sièges avant d'un camping-car doivent être très sérieusement accrochés au châssis pour qu'en cas de choc ils ne puissent s'arracher de leur support et éviter ainsi que le passager ne soit projeté contre l'avant de l'habitacle. Or certains constructeurs de camping-car souhaitent que les ceintures de sécurité soient ancrées en trois points au siège. On comprend qu'ainsi, lors d'un choc, l'effort exercé par l'usager sur la ceinture et le haut du siège, est tout à fait considérable et fait levier entre le haut et le bas du dossier. Aucun des dispositifs d'accrochage anti-arrachement utilisés jusqu'à ce jour ne peut résister à une telle pression qui peut atteindre quatre tonnes.

Un autre impératif pour ces sièges de camping-car est de pouvoir rabattre leur dossier vers l'avant, au-dessus de l'assise, ceci pour pouvoir libérer l'espace supérieur de l'habitacle en vue notamment de permettre l'abaissement du compartiment de couchettes supérieures comme le préconisent de plus en plus de constructeurs.

Les dispositifs connus d'articulation des dossiers et de fixation des sièges sur leur support, ne permettent pas d'assurer à la fois une sécurité anti-arrachement en cas de choc, et d'autoriser le repli vers l'avant des dossiers, par une manoeuvre simple.

L'invention apporte une solution à ce problème en proposant un dispositif à butées escamotables qui permettent, dans une position, de bloquer le dossier de façon à compenser l'effet levier en cas de choc, et dans une autre position de libérer ledit dossier qui peut être alors pivoté vers l'avant.

L'invention a donc pour objet principal un siège à dossier rabattable, pour véhicule, comportant une assise fixée au plancher par l'intermédiaire d'une base pivotante et un dossier rabattable vers l'avant en pivotant sur un axe, siège selon lequel les flancs rigides du dossier se terminent par une partie profilée se trouvant en avant de l'axe de pivotement, lesdites parties profilées du dossier prenant appui sur des butées rigidement solidaires de l'assise du siège, mais pouvant s'en désolidariser. Selon une forme particulière de réalisation, les butées sont escamotables et peuvent être escamotées par un mécanisme de manoeuvre.

Selon une autre caractéristique de l'invention de chaque côté de l'assise, vers l'arrière, sont fixés des flasques écartés l'un de l'autre, à l'intérieur desquels peuvent basculer les flancs du dossier, les flasques étant pourvus d'un jeu d'orifices, au même niveau, en avant de l'axe. Les butées sont montées coulissantes à l'intérieur d'un tube faisant entretoise entre les flasques intérieurs, coiffant leurs orifices, et un ressort intégré au tube maintient les butées écartées l'une de l'autre.

Selon une autre caractéristique avantageuse de l'invention, le mécanisme de manoeuvre est constitué d'une tringle pivotante et de bielles agissant sur les butées coulissantes, l'ensemble étant actionné par un levier de commande.

D'autres caractéristiques et avantages de l'invention ressortiront de la description qui va suivre d'un exemple de réalisation dans lequel il est fait référence aux dessins annexés qui représentent :
Figure 1, une vue générale éclatée, de côté, d'un siège et de son support ;
Figure 2, une vue en perspective de la partie arrière de l'assise du siège ;
Figure 3, une vue en coupe transversale des flasques et du tube intermédiaire ;
Figure 4, une vue schématique en plan du mécanisme de manoeuvre.
Figure 5, une vue en perspective d'une variante de réalisation.

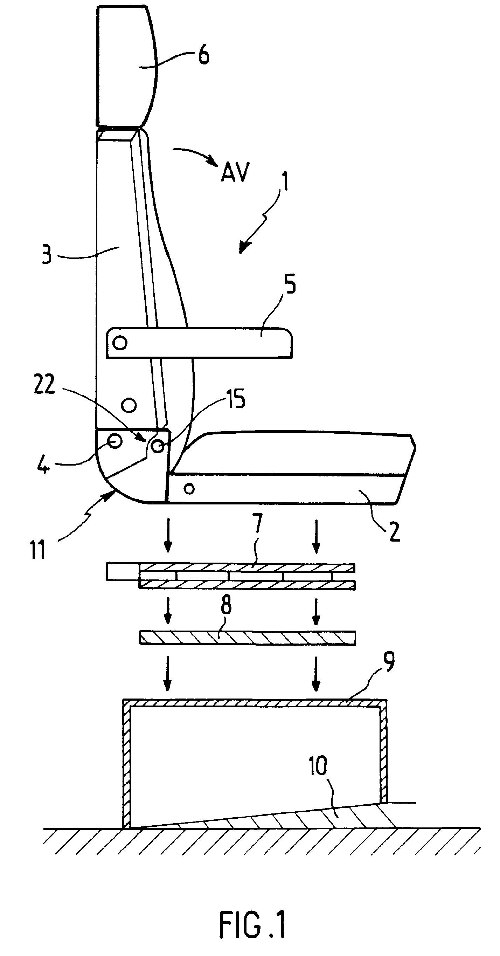

Un siège 1 de camping-car tel que celui représenté à la figure 1, se compose essentiellement d'une assise 2 et d'un dossier 3 rabattable vers l'avant en pivotant sur un axe 4. Le dossier est également équipé d'accoudoirs réglables 5 et d'un appui-tête 6. L'assise du siège est fixée à une base pivotante 7 reliée à des glissières 8 elles-mêmes fixées à un socle 9 solidaire du plancher 10 du camping-car.

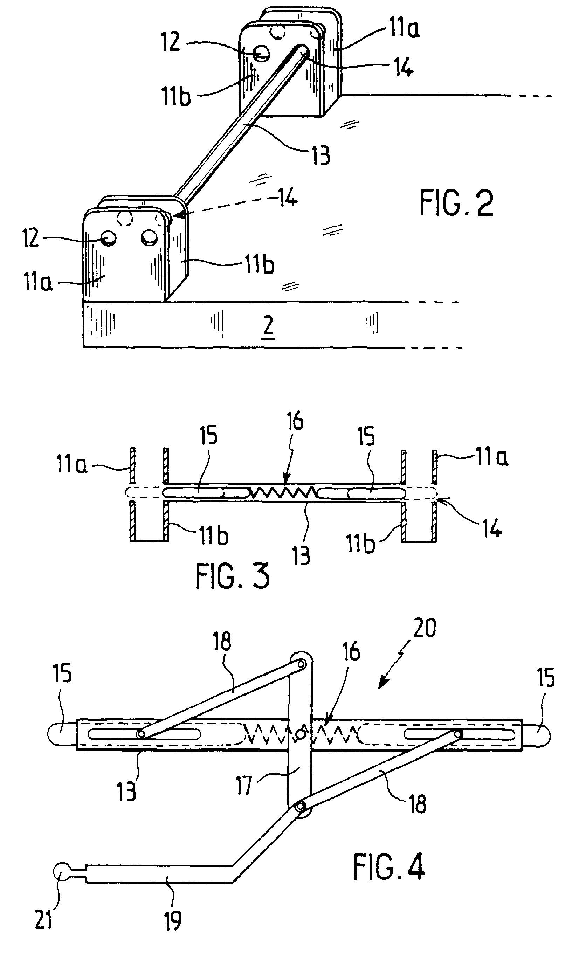

De chaque côté de l'assise 2, vers l'arrière, sont fixés deux flasques 11a et 11b écartés l'un de l'autre de quelques centimètres et maintenus par des entretoises non représentées. On voit aussi et plus précisément à la figure 2 que les flasques sont percés vers l'arrière, d'orifices 12 situés au même niveau et dans un même plan horizontal pour le passage de l'axe d'articulation 4 du dossier 3, les flancs de ce dernier pouvant donc basculer entre les flasques 11a et 11b. Un autre jeu d'orifices 14 est percé dans les flasques, en avant de l'axe 4 et sensiblement au même niveau. Entre les deux flasques intérieurs 11b est rapporté un tube 13 faisant entretoise qui est soudé auxdits flasques en coiffant leurs orifices 14.

A l'intérieur de ce tube 13 et en chacune de ses extrémités, peut se déplacer une butée coulissante 15 comme le montre la figure 3. Cette butée peut occuper une position dans laquelle elle est effacée à l'intérieur du tube 13 (en traits pleins). Dans ce cas elle ne déborde pas dans l'espace intermédiaire aux flasques 11a et 11b. Dans une autre position la butée (en traits pointillés) est sortie du tube 13, elle s'étend entre les flasques et dépasse de l'orifice 14 du flasque extérieur 11a sur lequel elle prend appui. Chaque butée est ainsi rigidement solidaire de l'assise 2, grâce aux flasques 11.

Les deux butées coulissantes 15 sont maintenues écartées l'une de l'autre, c'est-à-dire dans cette dernière position (en pointillés), par un ressort 16 intégré dans le tube 13.

Un mécanisme de manoeuvre des butées désigné dans son ensemble par la référence 20 est représenté plus précisément à la figure 4. Il est constitué d'une tringle 17 montée pivotante sur le centre du tube 13. A chaque extrémité de la tringle est articulée une bielle 18 qui tourillonne d'un côté et de l'autre du tube sur la butée coulissante 15 correspondante. Le ressort 16 est intégré dans le tube entre les butées. On peut faire pivoter la tringle 17 par un levier de commande 19.

Ce mécanisme de manoeuvre 20 est avantageusement logé entre la paire de flasques 11, à l'arrière et à la base du dossier 3, une manette 21 en bout du levier 19 étant accessible à l'usager.

On voit à la figure 1 le dossier 3 en position verrouillée. On remarque que le flanc rigide du dossier se termine à sa partie inférieure par une partie profilée 22 formant une concavité orientée vers l'avant. Cette concavité se trouve en avant de l'axe 4 et sensiblement au même niveau. Chaque flanc du dossier, qui se trouve entre les flasques est en appui avant contre la butée 15 qui est en position normale (sous l'effet du ressort) engagée dans les deux orifices 14 des flasques correspondants.

En cas de choc, la poussée exercée vers l'avant par le dossier selon la flèche AV est bloquée par le point d'appui avant que constituent ces butées. La résistance est bien supérieure à celle d'un dossier classique qui ne serait maintenu que par son axe de pivotement 4.

Un tel verrouillage n'exclue cependant pas le basculement du dossier vers l'avant. Pour cela l'usager agit sur la manette 21 et le levier 19, ce qui a pour effet de faire pivoter la tringle 17 et aussi, grâce aux bielles 18, de déplacer les butées 15 qui s'effacent à l'intérieur du tube 13 à l'encontre de la force du ressort 16. La base profilée 22 n'étant plus bloquée, le dossier 3 peut aisément basculer vers l'avant en pivotant autour de l'axe 4.

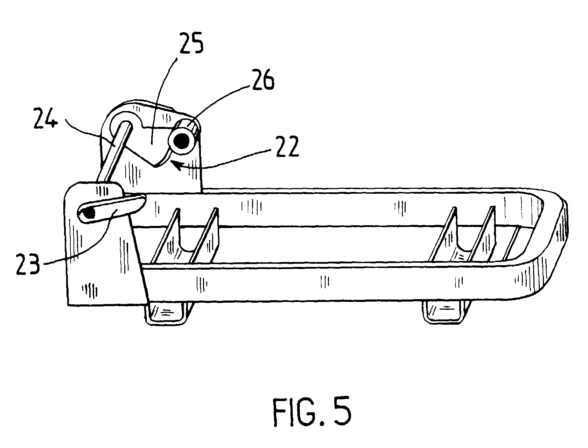

Dans la variante de réalisation de la figure 5, il n'y a plus de tube creux de liaison tel que le tube 13 des figures 2 et 3. Par contre à la base du dossier et sur un de ses côtés est prévue une manette 23 de réglage de l'inclinaison du dossier qui commande également une barre de liaison 24 elle-même liée à une came pivotante 25 de chaque côté du dossier. Celle-ci présente une partie profilée 22 venant en appui sur un axe fixe de blocage 26 monté sur les flasques.

Quand on agit sur la manette 23, on fait pivoter le dossier en même temps que la came 25 dont la partie profilée 22 peut donc se désolidariser de l'axe 26 formant butée ce qui permet de libérer le dossier vers l'avant.

L'invention ne se limite pas à l'exemple de réalisation précédemment décrit mais peut comporter des variantes. Notamment le mécanisme de manoeuvre 20 peut être réalisé par d'autres systèmes de liaison assurant la simultanéité du déplacement des deux butées.

## Revendications

1. Siège à dossier rabattable, pour véhicule, comportant une assise fixée au plancher par l'intermédiaire d'une base pivotante et un dossier rabattable vers l'avant en pivotant sur un axe caractérisé en ce que les flancs rigides du dossier (3) se terminent par une partie profilée (22) se trouvant en avant de l'axe (4) de pivotement, et en ce que lesdites parties profilées du dossier prennent appui sur des butées (15, 26) rigidement solidaires de l'assise (2, 11) du siège, et peuvent s'en désolidariser.

2. Siège à dossier rabattable selon la revendication 1 caractérisé en ce que les butées (15) sont escamotables et peuvent être escamotées par un mécanisme de manoeuvre (20).

3. Siège à dossier rabattable selon la revendication 1, caractérisé en ce que la partie profilée (22) forme une concavité orientée vers l'avant, sensiblement au même niveau que l'axe (4).

4. Siège à dossier rabattable selon la revendication 1 caractérisé en ce que de chaque côté de l'assise (2), vers l'arrière, sont fixés deux flasques (11a) et (11b) écartés l'un de l'autre, à l'intérieur desquels peuvent basculer les flancs du dossier (3), les flasques étant pourvus d'un jeu d'orifices (14), au même niveau, en avant de l'axe (4).

5. Siège à dossier rabattable selon la revendications 2 et 4, caractérisé en ce que les butées (15) sont montées coulissantes à l'intérieur d'un tube (13) faisant entretoise entre les deux flasques intérieurs (llb) en coiffant leurs orifices (14).

6. Siège à dossier rabattable selon les revendications 2 et 5, caractérisé en ce que les butées coulissantes (15) sont maintenues écartées l'une de l'autre et s'étendent entre les flasques (11a, 11b) grâce à un ressort (16) intégré dans le tube (13).

7. Siège à dossier rabattable selon les revendications 2 et 5, caractérisé en ce que le mécanisme de manoeuvre (20) est constitué d'une tringle pivotante (17) et de bielles (18) agissant sur les butées coulissantes (15), l'ensemble étant actionné par un levier de commande (19).

8. Siège à dossier rabattable selon les revendications 4 et 7, caractérisé en ce que le mécanisme de manoeuvre (20) est logé entre la paire de flasques (11), à l'arrière et à la base du dossier (3).

9. Siège à dossier rabattable selon la revendication 1 caractérisé en ce que la partie profilée (22) fait partie d'une came pivotante (25) en appui sur un axe fixe de blocage (26).

10. Siège à dossier rabattable selon la revendication 9 caractérisé en ce que une manette (23) de réglage de l'inclinaison du dossier commande également une barre de liaison (24) liée aux cames pivotantes (25).
